# EUROPEAN PATENT SPECIFICATION

(11) **EP 2 010 034 B1**
(45) Date of publication and mention of the grant of the patent: **14.11.2018**
(21) Application number: 07724031.5
(22) Date of filing: 05.04.2007
(51) Int. Cl.: A47J 37/12

(54) **FRYER**
FRITTEUSE
FRITEUSE

(30) Priority: 12.04.2006 IT MI20060730
(43) Date of publication of application: 07.01.2009
(73) Proprietor: DE' LONGHI S.p.A., 31100 Treviso (IT)
(72) Inventor: MAZZON, Renzo, 31057 Silea (Treviso) (IT)
(74) Representative: Rapisardi, Mariacristina
(86) International application number: PCT/EP2007/003090
(87) International publication number: WO 2007/115784

(56) References cited:
- EP-A- 1 563 778
- BE-A1- 893 919
- DE-A1- 3 150 455
- FR-A1- 2 239 223
- FR-A1- 2 239 224
- FR-A1- 2 804 309
- GB-A- 1 390 916
- US-A- 5 238 138

## Description

The present invention refers to a fryer adapted for cooking food products in oil.

Known fryers comprise a housing body of a collection tank of the cooking oil, in which there is a containment rack of the food to be cooked, and a closure cover hinged to the housing body of the oil collection tank.

The hinge structure is composed of male and female parts, reciprocally detachable to permit the removal of the cover and to facilitate the cleaning of all of fryer components.

Fixing elements are borne on the male and female parts of the hinge which are mechanically bound in various modes, for example through screws or the other items, to the cover and containment body of the rack.

The hinge structure therefore is composed of a plurality of parts which must be assembled. Moreover, the cleaning of the junction zones between the fixing elements and the male and female parts of the hinge, in which dirt tends to penetrate, is sometimes complicated and can require the dismantling of the hinge into its basic components.

FR2239223, FR2239224 and DE3150455 disclose a fryer according to the preamble of claim 1.

Technical task which the present invention proposes is therefore that of making a fryer which permits eliminating the technical drawbacks lamented in the prior art.

In the scope of this technical task, one object of the invention is that of making a fryer which has a structurally simple hinge.

In the scope of this technical task, one object of the invention is that of making a fryer which has a structurally simple hinge structure, having a reduced number of components which are economical and suitable to permit an easy inspection and cleaning of all of its parts.

The technical task, as well as these and other aims according the present invention are achieved by making a fryer according to claim 1.

Other characteristics of the present invention are defined, moreover, in the subsequent claims.

Further characteristics and advantages of the invention will be more evident from the description of a preferred but not exclusive embodiment of the fryer, illustrated as indicative and non-limiting in the attached drawings, wherein:

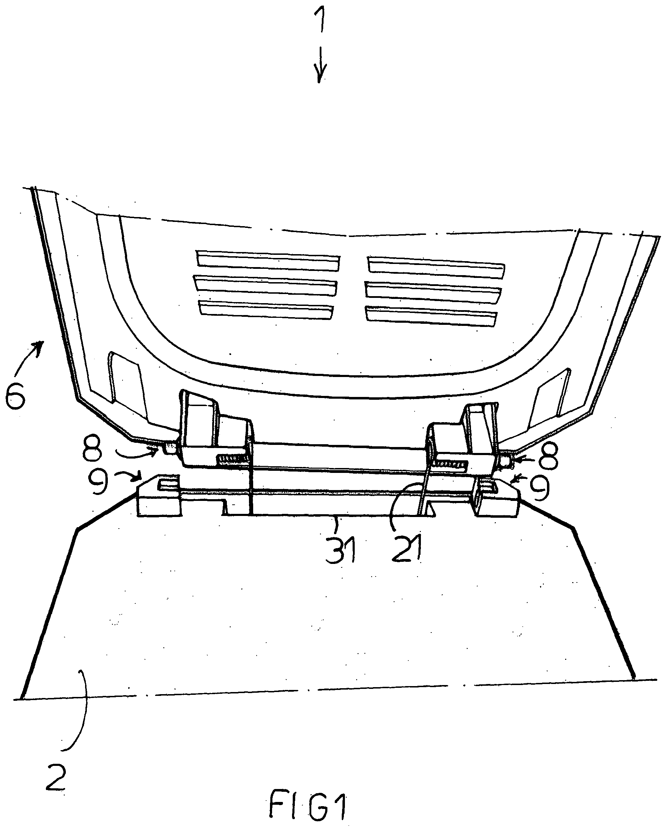

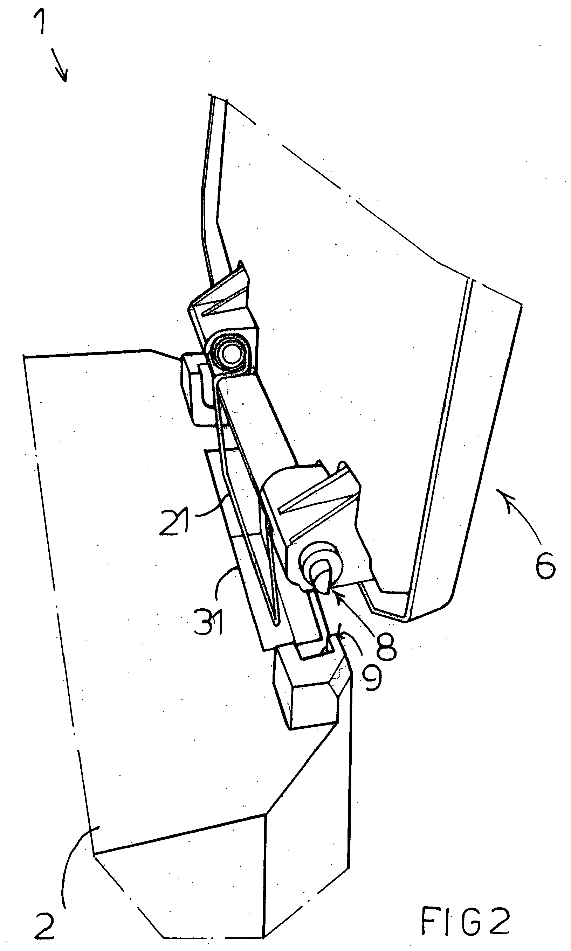

Figures 1 and 2 show perspective views of the hinging zone between the cover and the body of the fryer;

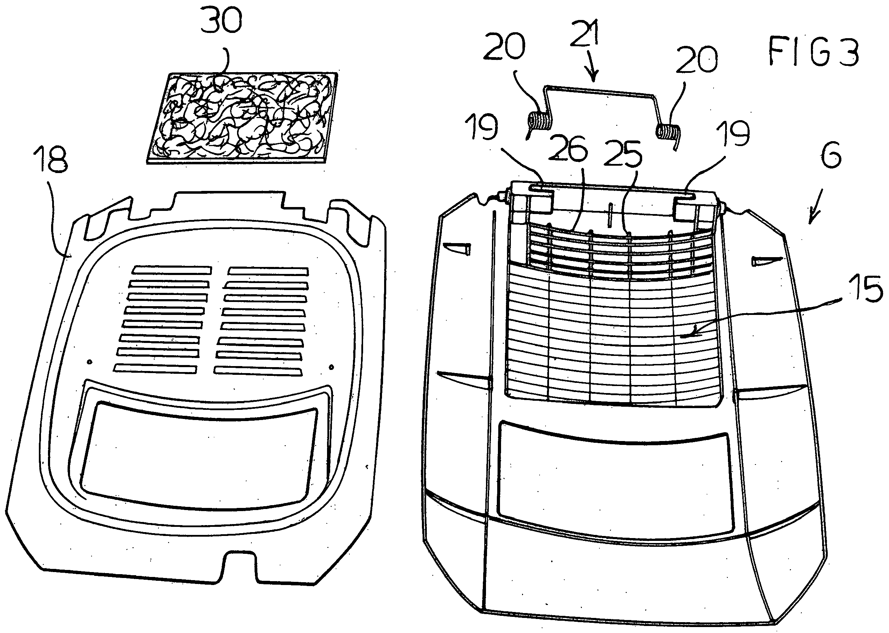

Figure 3 shows an exploded view of the cover of the fryer;

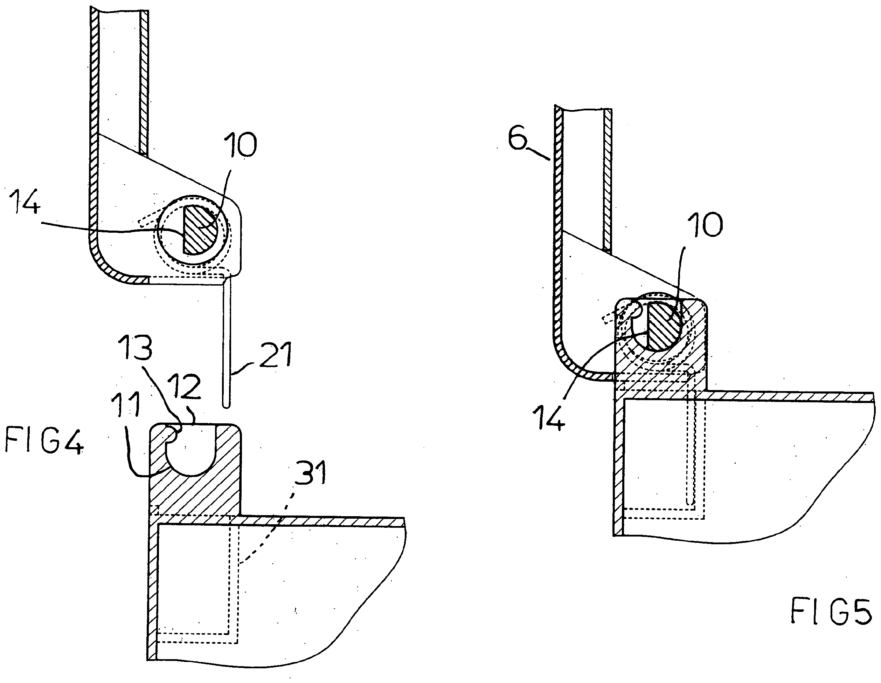

Figures 4 and 5 show a respectively exploded and assembled view of the hinging zone, orthogonal sectioned at the hinging axis and with the cover in opening position;

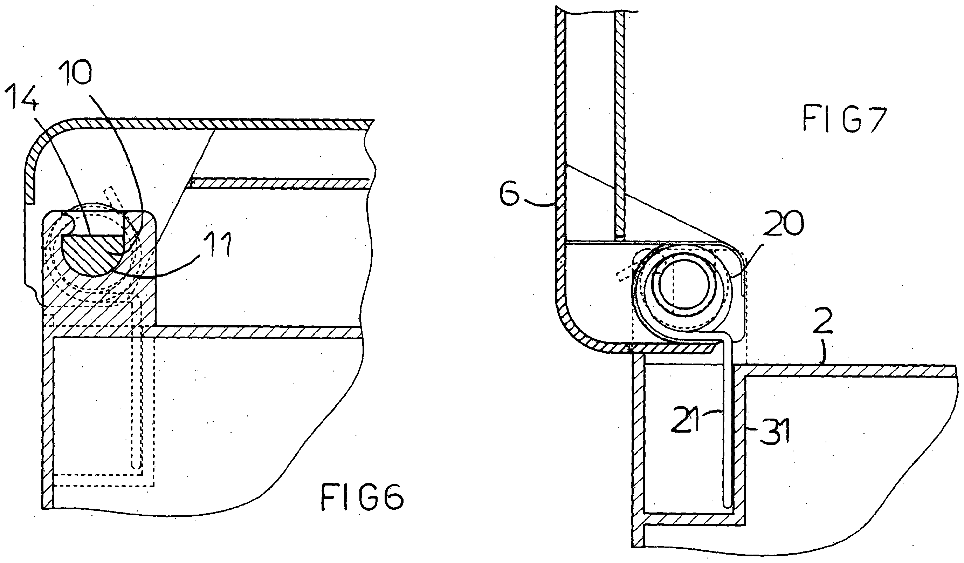

Figure 6 shows a view of the assembled hinging zone, orthogonally sectioned at the hinging axis and with the cover in closed position; and
Figure 7 shows a view from the inner side of the assembled hinging zone, orthogonally sectioned at the hinging axis and with the cover in open position.

With reference to the mentioned figures, a fryer is shown, generically indicated with the reference number 1.

The fryer 1 comprises a main body 2 in which a housing seat (not shown) is present of a cooking oil containment tank, in which a generally wire netting rack is in turn inserted, adapted to contain the food to be cooked.

At the top of the body 2, a plastic cover 6 is attached by means of at least one rotation hinge, which is composed of a rotatably connected first part 8 and second part 9.

In the embodiment shown as an example, the rotation of the cover 6 is made possible by means of two coaxial, suitably-spaced hinges.

According to the invention, the first hinge part 8 is formed integrally with the cover 6.

Moreover, the body 2 is preferably made of plastic, and the second hinge part 9 is advantageously formed integrally with the body 2.

In substance, the first hinge part 8 is comoulded with the cover 6, while the second hinge part 9 is comoulded with the body 2.

In this manner, the hinge is composed of a minimum number of parts and does not require foreseeing separate fastening elements at the cover 6 and body 2.

The hinge has a very simple structure and is particularly economical to make, in addition to being easy to inspect and clean in every part thereof.

In the shown example, the first hinge part 8 is of male type, while the second hinge part 9 is of female type: more precisely, the first hinge part 8 comprises a cylindrical hinging pin 10, while the second hinge part 9 comprises a hinging seat 11 matching the pin 10. The pin 10 is positioned rearward at the inner side of the cover 6, while the seat 11 is positioned on the upper edge of the rear wall of the body 2.

The seat 11 has a lateral opening 12 for the extraction of the pin 10 with a movement orthogonal to the axis of the latter.

In the opening 12, a holding member of the pin 10 in the seat 11 is present, while the pin 10 has a member for releasing from the holding member at a predetermined rotation angle of the hinge, for disengaging the cover 6 from the body 2.

The holding member comprises a shaped cam 13 on the profile of the opening 12, while the release member comprises an undercut 14 of the lateral surface of the pin 10.

The undercut 14 is more precisely a levelled portion at which the pin 10 has a diameter reduced to a minimum diameter.

In substance, the cam 13 creates a groove in the opening 12 with width substantially equal to the minimum diameter of the pin 10, and such groove can be crossed by the pin 10 only when the pin 10 aligns its minimum diameter therewith.

The predetermined rotation angle advantageously corresponds to the angular fully open position of the cover 6.

The cover 6 has stiffening ribs made integrally with the cover 6 itself.

The ribs preferably conform with those which define the openings of the filtering grate 15, it too present on the cover 6, and are therefore composed of a first group of ribs 25 with extension substantially transverse to the hinging axis of the cover 6, intersected by a second group of ribs 26 with extension substantially parallel to the hinging axis of the cover 6.

The ribs 25 and 26 mainly oppose the bending action of the cover 6 in the plane orthogonal to its hinging axis.

The cover 6 is equipped with a metal form 18 which is fit at its inner side and which has the double function of withstanding the temperature and holding the vapour filter 30 against the filtering grate 15.

The inner side of the cover 6 finally has, rearward, locking seats 19 of the helical ends 20 of a return spring 21 of the cover 6 towards its angular fully open position.

Advantageously, also such locking seats 19 are made integrally with the cover 6, and are interposed and coaxial with the hinges. The spring 21 is a metal wire having a U-shaped portion fit in a slit 31 which extends vertically inside the rear wall of the body 2.

The closure of the cover 6 elastically deforms the spring 21, loading it. The potential energy of the spring 21 is released at the time of the opening of the cover 6, when the spring 21 recovers the initial conformation, bringing the cover 6 towards the fully open position in which it is removable from the body 2.

Practically, it was verified how the fryer according to the invention is particularly advantageous for the fact that it provides a hinging structure, between the cover and the housing body of the cooking oil collection tank, which has a simple and economical structure composed of a minimum number of parts, easily separable for removing the cover and permitting an easy access for the inspection and cleaning of all parts.

The fryer thus conceived is susceptible to numerous modifications and variants within the scope of the invention as defined in the appended claims.

## Claims

1. Fryer (1) having at least one hinge between its plastic cover (6) and its housing body (2) of the cooking oil containment tank, said hinge having a first hinge part (8) rotatably connected to a second hinge part (9), said first hinge part (8) being formed integrally with said cover, said first hinge part (8) comprising a cylindrical hinging pin (10) and said second hinge part (9) comprising a hinging seat (11) matching said pin (10), said seat (11) having a lateral opening (12) for the extraction of said pin (10) with a movement orthogonal to its axis, **characterised in that** a holding member of said pin (10) in said seat (11) is present in said opening (12), and said pin (10) has a member for releasing from said holding member at a rotation angle of said hinge, for disengaging said cover (6) from said housing body (2), said holding member comprising a shaped cam (13) on the profile of said opening (12), and said release member comprising an undercut (14) of the lateral surface of said pin (10).

2. Fryer (1) according to claim 1, **characterised in that** said containment body (2) is made of plastic and said second hinge part (9) is formed integrally with said housing body (2).

3. Fryer (1) according to one or more of the preceding claims, **characterised in that** said pin (10) is positioned rearward at the inner side of said cover (6), and said seat (11) is positioned on the upper edge of the upper wall of said housing body (2).

4. Fryer (1) according to one or more of the preceding claims, **characterised in that** said rotation angle corresponds to the angular fully open position of said cover (6).

5. Fryer (1) according to one or more of the preceding claims, **characterised in that** the inner side of said cover (6) has stiffening ribs (25, 26) made integrally with said cover (6).

6. Fryer (1) according to claim 5, **characterised in that** said stiffening ribs (25, 26) comprise a first group of ribs (25) with extension substantially transverse to the hinging axis of said cover (6), intersected by a second group of ribs (26) with extension substantially parallel to the hinging axis of said cover (6).

7. Fryer (1) according to one or more of the preceding claims, **characterised in that** the inner side of said cover (6) has, rearward, locking seats (1) of the ends (20) of a return spring (21) of said cover (6) towards said angle of full opening, said locking seats being made integrally with said cover (6).

## Patentansprüche

1. Fritteuse (1) aufweisend mindestens ein Scharnier zwischen ihrer Kunststoffabdeckung (6) und ihrem Gehäusekörper (2) des Speiseölsicherheitsbehälters, wobei das Scharnier einen ersten Scharnierteil (8) aufweist, der drehbar mit einem zweiten Scharnierteil (9) verbunden ist, wobei der erste Scharnierteil (8) einstückig mit der Abdeckung ausgebildet ist, wobei der erste Scharnierteil (8) einen zylindrischen Scharnierstift (10) und der zweite Scharnierteil (9) einen Scharniersitz (11) umfasst, der dem Stift (10) entspricht, wobei der Sitz (11) eine seitliche Öffnung (12) für die Extraktion des Stiftes (10) mit einer Bewegung orthogonal zu seiner Achse aufweist, **dadurch gekennzeichnet, dass** ein Halteelement des Stiftes (10) in dem Sitz (11) in der Öffnung (12) vorhanden ist und der Stift (10) ein Element zum Lösen von dem Halteelement in einem Drehwinkel des Scharniers aufweist, um die Abdeckung (6) vom Gehäusekörper (2) abzukoppeln, wobei das Halteelement einen geformten Nocken (13) am Profil der Öffnung (12) aufweist und das Löseelement einen Hinterschnitt (14) der Seitenfläche des Stiftes (10) umfasst.

2. Fritteuse (1) nach Anspruch 1, **dadurch gekennzeichnet, dass** der Sicherheitskörper (2) aus Kunststoff hergestellt ist und der zweite Scharnierteil (9) einstückig mit dem Gehäusekörper (2) ausgebildet ist.

3. Fritteuse (1) nach einem oder mehreren der vorhergehenden Ansprüche, **dadurch gekennzeichnet, dass** der Stift (10) an der Innenseite der Abdeckung (6) nach hinten positioniert ist und der Sitz (11) an der Oberkante der oberen Wand des Gehäusekörpers (2) positioniert ist.

4. Fritteuse (1) nach einem oder mehreren der vorhergehenden Ansprüche, **dadurch gekennzeichnet, dass** der Drehwinkel der winkligen, vollständig geöffneten Position der Abdeckung (6) entspricht.

5. Fritteuse (1) nach einem oder mehreren der vorhergehenden Ansprüche, **dadurch gekennzeichnet, dass** die Innenseite der Abdeckung (6) Versteifungsrippen (25, 26) aufweist, die einstückig mit der Abdeckung (6) ausgeführt sind.

6. Fritteuse (1) nach Anspruch 5, **dadurch gekennzeichnet, dass** die Versteifungsrippen (25, 26) eine erste Gruppe von Rippen (25) mit einer Verlängerung im Wesentlichen quer zur Scharnierachse der Abdeckung (6) umfassen, die von einer zweiten Gruppe von Rippen (26) mit einer Verlängerung im Wesentlichen parallel zur Scharnierachse der Abdeckung (6) geschnitten wird.

7. Fritteuse (1) nach einem oder mehreren der vorhergehenden Ansprüche, **dadurch gekennzeichnet, dass** die Innenseite der Abdeckung (6) nach hinten Verriegelungssitze (1) der Enden (20) einer Rückstellfeder (21) der Abdeckung (6) in Richtung des Winkels der vollständigen Öffnung aufweist, wobei die Verriegelungssitze einstückig mit der Abdeckung (6) ausgeführt sind.

## Revendications

1. Friteuse (1) comportant au moins une charnière entre son couvercle en plastique (6) et son corps de logement (2) de la cuve de contenance d'huile de cuisson, ladite charnière comportant une première partie de charnière (8) reliée de façon rotative à une seconde partie de charnière (9), ladite première partie de charnière (8) étant formée intégralement avec ledit couvercle, ladite première partie de charnière (8) comprenant une broche de charnière cylindrique (10) et ladite seconde partie de charnière (9) comprenant un siège de charnière (11) correspondant à ladite broche (10), ledit siège (11) comportant une ouverture latérale (12) pour l'extraction de ladite broche (10) par un mouvement orthogonal par rapport à son axe, **caractérisée en ce qu'**un élément de retenue de ladite broche (10) dans ledit siège (11) est présent dans ladite ouverture (12), et ladite broche (10) comporte un organe pour se libérer dudit élément de retenue à un angle de rotation de ladite charnière pour désengager ledit couvercle (6) dudit corps de logement (2), ledit élément de retenue comprenant une came façonnée (13) sur le profil de ladite ouverture (12), et ledit organe de libération comprenant une dépouille (14) de la surface latérale de ladite broche (10).

2. Friteuse (1) selon la revendication 1, **caractérisée en ce que** ledit corps de contenance (2) est en plastique et ladite seconde partie de charnière (9) est formée intégralement avec ledit corps de logement (2).

3. Friteuse (1) selon l'une ou plusieurs des revendications précédentes, **caractérisée en ce que** ladite broche (10) est positionnée vers l'arrière en correspondance du côté interne dudit couvercle (6), et ledit siège (11) est positionné sur le bord supérieur de la cloison supérieure dudit corps de logement (2).

4. Friteuse (1) selon l'une ou plusieurs des revendications précédentes, **caractérisée en ce que** ledit angle de rotation correspond à la position angulaire totalement ouverte dudit couvercle (6).

5. Friteuse (1) selon l'une ou plusieurs des revendications précédentes, **caractérisée en ce que** le côté interne dudit couvercle (6) comporte des nervures de raidissement (25, 26) réalisées intégralement avec ledit couvercle (6).

6. Friteuse (1) selon la revendication 5, **caractérisée en ce que** les rainures de raidissement (25, 26) comprennent un premier groupe de nervures (25), ayant une extension substantiellement transversale à l'axe d'articulation dudit couvercle (6), croisé par un second groupe de nervures (26) ayant une extension substantiellement parallèle à l'axe d'articulation dudit couvercle (6).

7. Friteuse (1) selon l'une ou plusieurs des revendications précédentes, **caractérisée en ce que** le côté interne dudit couvercle (6) comporte, vers l'arrière, des sièges de verrouillage (1) des extrémités (20) d'un ressort de rappel (21) dudit couvercle (6) vers ledit angle d'ouverture complète, lesdits sièges de verrouillage étant réalisés intégralement avec ledit couvercle (6).
